(19)

Europäisches Patentamt
European Patent Office
Office européen des brevets

(11) **EP 4 692 897 A1**

(12) **EUROPEAN PATENT APPLICATION**
published in accordance with Art. 153(4) EPC

(43) Date of publication:
**11.02.2026 Bulletin 2026/07**

(21) Application number: **24832239.8**

(22) Date of filing: **10.05.2024**

(51) International Patent Classification (IPC):
*G02B 27/01* (2006.01)  *G02B 13/00* (2006.01)
*G02B 9/34* (2006.01)  *G02B 27/09* (2006.01)
*G02B 27/10* (2006.01)  *G02B 5/30* (2006.01)
*G06F 1/16* (2006.01)

(52) Cooperative Patent Classification (CPC):
**G02B 5/30; G02B 9/34; G02B 13/00; G02B 27/01;
G02B 27/09; G02B 27/10; G06F 1/16**

(86) International application number:
**PCT/KR2024/006386**

(87) International publication number:
**WO 2025/005455 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.06.2023 KR 20230082434
20.07.2023 KR 20230094490**

(71) Applicant: **Samsung Electronics Co., Ltd.
Suwon-si, Gyeonggi-do 16677 (KR)**

(72) Inventors:
• **KWAK, Hokeun
Suwon-si Gyeonggi-do 16677 (KR)**
• **CHOI, Dongok
Suwon-si Gyeonggi-do 16677 (KR)**
• **HEU, Min
Suwon-si Gyeonggi-do 16677 (KR)**

(74) Representative: **Appleyard Lees IP LLP
15 Clare Road
Halifax HX1 2HY (GB)**

(54) **WEARABLE ELECTRONIC DEVICE COMPRISING LENS ASSEMBLY**

(57) According to one embodiment of the present disclosure the wearable electronic device may comprise a lens assembly for focusing or guiding, on or to both eyes of a user, visual information that is output from a display. In one embodiment, the lens assembly can include: at least four lenses sequentially arranged in the direction toward the display along an optical axis; a first polarizing plate disposed on a user eye-side surface of one (hereinafter, referred to as "n-th lens") of the at least four lenses; a beam splitter disposed on a display-side surface of the n-th lens; and a second polarizing plate disposed on an eye-side surface of a user of an (n+1)-th lens disposed between the n-th lens and the display while being adjacent to the n-th lens from among the at least four lenses. In one embodiment, the first polarizing plate can reflect at least some of the visual information that is output from the display, and the beam splitter can reflect at least some of the visual information reflected by the first polarizing plate. Other various embodiments are also possible.

FIG. 6

**Description**

[Technical Field]

One or more embodiments of the disclosure relate to an electronic device such as a wearable electronic device including a lens assembly.

[Background Art]

A portable electronic device (e.g., an electronic scheduler, a portable multimedia player, a mobile communication terminal, or a tablet PC) is generally equipped with a display member (e.g., a display module) and a battery, and has a bar-type, folder-type, or sliding-type appearance due to the shape of the display member or the battery. Recently, as display members and batteries have been improved in performance and miniaturized, electronic devices that are wearable on a portion of a user's body, such as the wrist or head, or in the form of clothing (hereinafter, referred to as "wearable electronic devices") are emerging.

Examples of wearable electronic devices include a head-mounted device (HMD), smartglasses, a smartwatch (or smartband), a contact lens-type device, a ring-type device, a clothing/shoe/glove-type device, and the like. These wearable electronic devices can be easily carried and improved in user accessibility.

As an example, the HMD is a device that is worn on a user's head or face and allows the user to view a virtual image in a three-dimensional space by projecting an image onto the user's retina. For example, the HMD may be classified into a see-through-type HMD configured to provide augmented reality (AR) or a see-closed-type HMD configured to provide virtual reality (VR). The see-through-type HMD may be implemented, for example, in the form of glasses, and may provide information about buildings, objects, and the like in the user's field of view to the user in the form of an image or text. The see-closed-type HMD may output independent images to both eyes of the user and output content (a game, a movie, streaming, broadcasting, or the like) provided from a mobile communication terminal or external input to the user wearing the HMD, in the form of image or sound, thereby providing an excellent sense of immersion. In addition, the HMD may be used to provide mixed reality (MR) or extended reality (XR), which is a mixture of augmented reality (AR) and virtual reality (VR).

Recently, product development related to the HMD is actively progressing, and the HMD is used for various purposes such as military, gaming, industrial, and medical purposes. Accordingly, there is a demand for HMDs capable of providing good image quality while being smaller and lighter.

The above-described information may be provided as related art for the purpose of helping to understand the disclosure. No claim or determination is made regarding whether any of the foregoing may be applied as prior art with respect to the disclosure.

[Detailed Description of the Invention]

[Technical Solution]

According to an embodiment of the disclosure, a wearable electronic device may include a display configured to output visual information, and a lens assembly configured to focus or guide the visual information output from the display. In an embodiment, the lens assembly may include at least four lenses sequentially arranged along an optical axis toward the display, a first polarizing plate disposed on an eye side surface of one of the at least four lenses (hereinafter referred to as an $n^{th}$ lens), a beam splitter disposed on a display side surface of the $n^{th}$ lens, and a second polarizing plate disposed on an eye side surface of an $(n+1)^{th}$ lens. Among the at least four lenses, the $(n+1)^{th}$ lens is disposed adjacent to the $n^{th}$ lens between the $n^{th}$ lens and the display. In an embodiment, the first polarizing plate may be configured to reflect at least a portion of visual information output from the display, and the beam splitter may be configured to reflect at least a portion of the visual information reflected by the first polarizing plate.

According to an embodiment of the disclosure, a wearable electronic device may include a display configured to output visual information, and a lens assembly configured to focus or guide the visual information output from the display. In an embodiment, the lens assembly may include at least four lenses sequentially arranged along an optical axis toward the display, a first polarizing plate disposed on an eye side surface of one of the at least four lenses (hereinafter referred to as an $n^{th}$ lens), wherein the first polarizing plate includes a reflective polarizer and a first quarter-wave plate disposed between the reflective polarizer and the $n^{th}$ lens, a beam splitter disposed on a display side surface of the $n^{th}$ lens, and a second polarizing plate disposed on an eye side surface of an $(n+1)^{th}$ lens disposed adjacent to the $n^{th}$ lens between the $n^{th}$ lens and the display among the at least four lenses, wherein the second polarizing plate includes a second quarter-wave plate and a second polarizer disposed between the second quarter-wave plate and the $(n+1)^{th}$ lens. In an embodiment, the $n^{th}$ lens may have a positive refractive power, the $(n+1)^{th}$ lens may have a negative refractive power, and among the at least four lenses, a lens, which is disposed between the $(n+1)^{th}$ lens and the display and positioned closest to the display, may have a positive refractive power.

[Brief Description of Drawings]

The above-described aspects or other aspects, configurations, and/or advantages regarding an embodiment of the disclosure may become more apparent through the following detailed description made with reference to the accompanying drawings.

FIG. 1 is a block diagram illustrating an electronic device according to an embodiment of the disclosure within a network environment.
FIG. 2 is a view illustrating a wearable electronic device according to an embodiment of the disclosure.
FIGS. 3 and 4 are views illustrating the front and rear sides of a wearable electronic device according to an embodiment.
FIG. 5 is view illustrating a path through which light output by a display is focused or guided to a user's eye in a wearable electronic device according to an embodiment of the disclosure.
FIG. 6 is a view illustrating a wearable electronic device and/or a lens assembly according to an embodiment of the disclosure.
FIG. 7 illustrates an enlarged view of portion A of FIG. 6 according to an embodiment of the disclosure.
FIG. 8 is a view illustrating a wearable electronic device and/or a lens assembly according to an embodiment of the disclosure.
FIG. 9 illustrates an enlarged view of portion B of FIG. 8 according to an embodiment of the disclosure.

Throughout the appended drawings, like reference numerals may be assigned to like components, configurations, and/or structures.

[Mode for Carrying out the Invention]

Wearable electronic devices implementing augmented reality, virtual reality, mixed reality and/or extended reality may generally be used while worn on a user's head or face. For example, a display configured to output visual information may be placed fairly close to a user's eye. When the display is relatively close to a user's eye, there may be difficulties in configuring an optical system that guides or focuses visual information to the user's eye. For example, in order to reduce the size or weight of a wearable electronic device, the size or number of lenses may be limited, and it may be difficult to implement an optical system capable of providing good image quality with a limited number of lenses. In an embodiment, in a usage environment in which the display is relatively close to a user's eye, an optical system of a pancake lens structure may be useful in providing good image quality while using a limited number of lenses. The optical system of a pancake lens structure may implement an optical path having a sufficient length relative to a mechanical length (e.g., a total lens length) by reflecting visual information at least twice along a path in which the visual information output from the display reaches the user's eye. The pancake lens structure may provide good image quality while being miniaturized. However, refraction or scattering of light may increase due to the repeated reflection structure. For example, when refraction or scattering of light increases, degradation of image quality may occur due to interference with refracted light or scattered light.
An embodiment of the disclosure is intended to at least address the above-described problems and/or disadvantages and at least provide the advantages described below, and may provide a wearable electronic device including a lens assembly that facilitates aberration control to achieve good image quality.
An embodiment of the disclosure may provide a wearable electronic device including a lens assembly that is miniaturized and/or made lightweight while providing good image quality.
An embodiment of the disclosure may provide a wearable electronic device that, by being miniaturized and/or lightweight, may reduce user fatigue when worn.
The technical issues to be addressed by the disclosure are not limited to those described above, and other technical issues may be clearly understood by a person ordinarily skilled in the related art to which the disclosure pertains.
The following description with reference to the appended drawings may provide an understanding of various exemplary implementations of the disclosure, including the claims and their equivalents. An exemplary embodiment disclosed in the following description includes various specific details to help understanding, but is considered to be one of various exemplary embodiments. Accordingly, it will be understood by a person ordinarily skilled in the art that various implementations described herein may be variously changed and modified without departing from the scope and spirit of the disclosure. In addition, descriptions of well-known functions and configurations may be omitted for clarity and brevity.
The terms and words used in the following description and claims are not limited to a bibliographical meaning, but may be used to describe an embodiment of the disclosure clearly and consistently. Accordingly, it will be apparent to those skilled in the art that the following description of various implementations of the disclosure is provided for explanatory purposes and not intended to limit the scope of the disclosure and equivalents thereof.

Unless the context clearly indicates otherwise, the singular forms of "a," "an," and "the" should be understood to include the plural meaning. Accordingly, for example, the term "a component surface" may be understood to include one or more surfaces of the component.

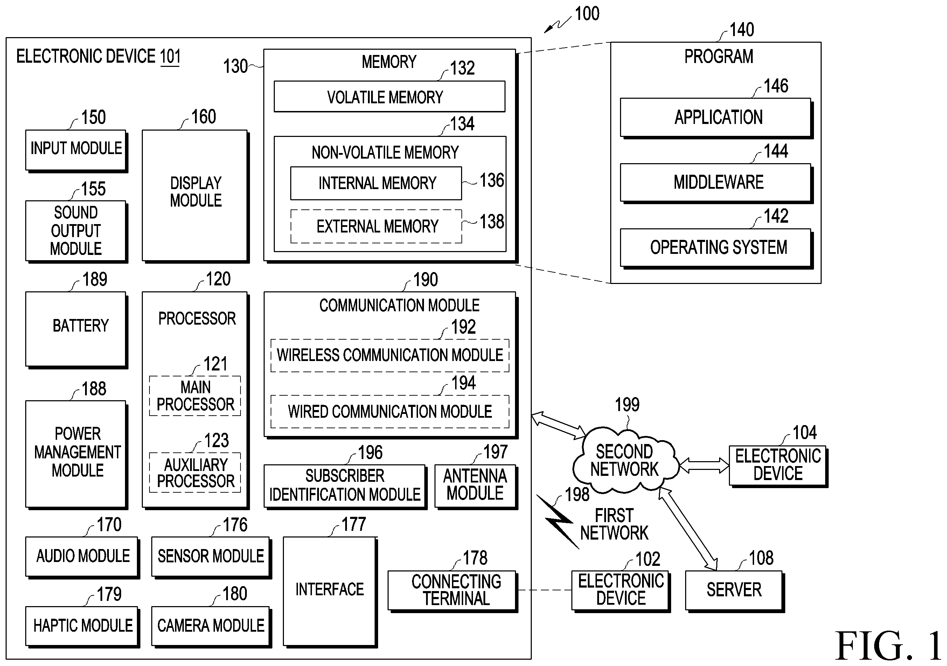

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

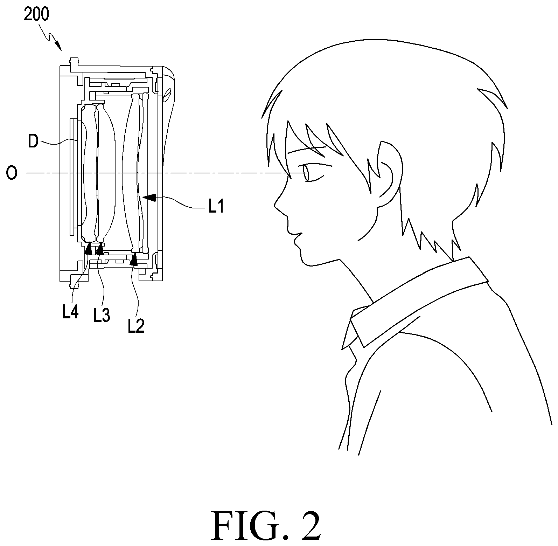

FIG. 2 is a view illustrating a wearable electronic device 200 according to an embodiment of the disclosure.

In describing an embodiment of the disclosure, some numerical values may be presented, but it is to be noted that these values do not limit the embodiment of the disclosure unless described in the claims.

Referring to FIG. 2, the wearable electronic device 200 (e.g., the electronic device 101 in FIG. 1) is an electronic device that is wearable on a user's head or face, and the user is capable of visually recognizing surrounding objects or environments even while wearing the wearable electronic device 200. The wearable electronic device 200 may use a camera module to acquire and/or recognize a visual image of an object or environment that the user is looking at or that is located in the direction in which the wearable electronic device 200 is oriented, and may receive information about the object or environment from an external electronic device via a network. The wearable electronic device 200 may provide the user with the received information about the object or environment in an acoustic or visual form. For example, the wearable electronic device 200 may provide the received information about the object or environment to the user in a visual form by using a display member such as a display module. By implementing information about the object or environments in a visual form and combining the visual image with an actual image (or video) of the environments surrounding the user, the wearable electronic device 200 may implement augmented reality (AR), virtual reality (VR), mixed reality (MR), and/or extended reality (XR). The display member may provide the user with information about objects or environments surrounding the user by outputting a screen in which an augmented reality object is added to the actual image (or video) of the environment of the user.

According to an embodiment, some or all of the operations executed in the electronic device 101 or the wearable electronic device 200 may be executed in one or more external electronic devices 102, 104, or 108. For example, when the electronic device 101 or the wearable electronic device 200 is to execute certain functions or services automatically or in response to a request from a user or another device, the electronic device 101 or the wearable electronic device 200 may request the one or more external electronic devices 102, 104, and 108 to execute at least some of the functions or the services, in place of or in addition to executing the functions or the services by itself. The one or more external electronic devices, which have received the above-mentioned request, may execute at least some of the requested functions or services, or additional functions or services associated with the request, and may transmit the result of the execution to the electronic device 101 or the wearable electronic device 200. The electronic device 101 or the wearable electronic device 200 may provide the result as part of a response to the request as it is, or may further process the result and provide the processed result at least part of a response to the request. For example, the external electronic device 102 may render content data executed in an application and then transmits the content data to the electronic device 101 or the wearable electronic device 200, and the electronic device 101 or the wearable electronic device 200, which receives the data, may output the content data to a display module. When the electronic device 101 or the wearable electronic device 200 detects the user's motion via sensors such as an inertial measurement unit sensor, a processor (e.g., the processor 120 in FIG. 1) of the electronic device 101 or the wearable electronic device 200 may correct, based on the motion information, the rendered data received from the external electronic device 102 and output the corrected data to the display module. Alternatively, when the user's motion is detected through the sensors, the processor (e.g., the processor 120 in FIG. 1) of the electronic device 101 or the wearable electronic device 200 may transmit the motion information to the external electronic device 102 and request rendering such that screen data is undated according to the motion information. According to various embodiments, the external electronic device 102 may be any of various types of devices, such as a case device capable of storing and charging the electronic device 101.

In the following detailed description, "a state or location in which an electronic device or a predetermined component of the electronic device faces a user's face" may be variously described, and it is to be noted that the description is made assuming that the user is wearing the wearable electronic device 200.

According to an embodiment, the wearable electronic device 200 may include at least one display member and a wearing member. Depending on the structure of the display member, the wearable electronic device 200 may further include a structure for mounting or supporting the display member (e.g., a lens frame). The display member may be provided as a pair including a first display member and a second display member, and the first display member and the second display member may be disposed to correspond to the user's right and left eyes, respectively, in a state in which the wearable electronic device 200 is worn on a user's body. In an embodiment, the wearable electronic device 200 may include a housing shape including a single display member corresponding to the right eye and the left eye (e.g., a goggle-like shape).

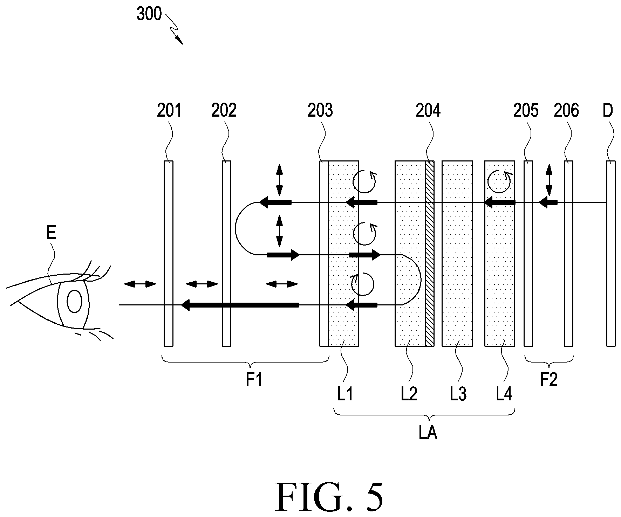

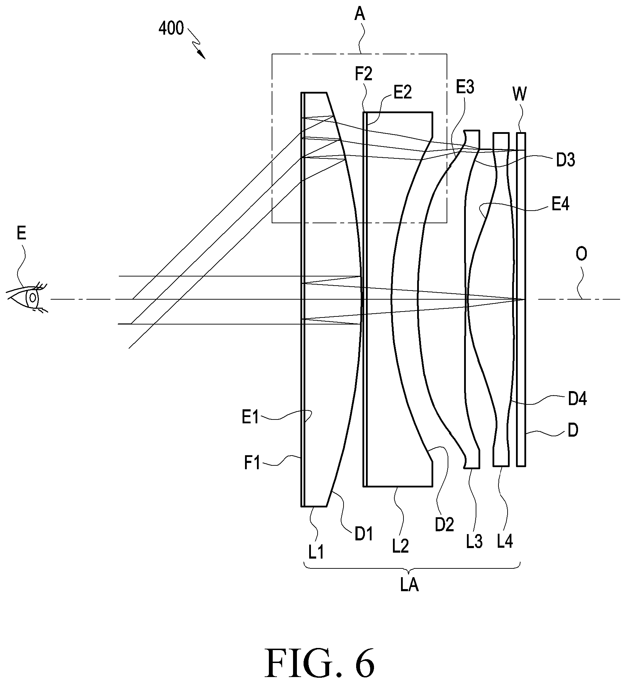

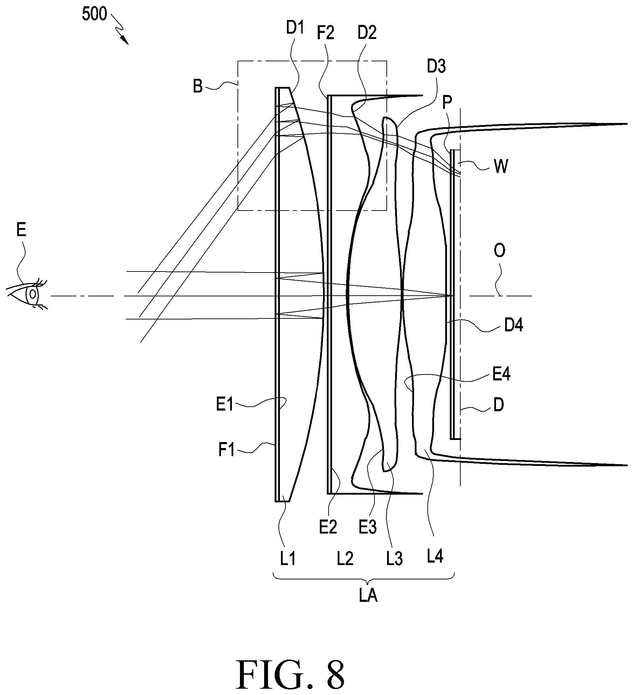

According to an embodiment, the display member may be a component provided to deliver visual information to a user, and may include, for example, a display D, a plurality of lenses L1, L2, L3, and L4 (e.g., a lens assembly), and/or at least one sensor. Here, each of the lens assembly and the display D may be formed to be transparent or translucent. However, the display member is not limited to this. In an embodiment, the display member may include a window member, and the window member may be translucent glass or may be a member having a light transmittance that is adjustable by adjusting the coloring concentration thereof. In an embodiment, the display member may include a lens including a waveguide or a reflective lens, and may provide visual information to a user by forming an image output from a light output device (e.g., a projector or a display D) on each lens. For example, the display member may refer to a display that may include a waveguide (e.g., a light waveguide) in at least a portion of each of the lenses and is capable of transmitting an image (or light) output from the light output device, such as the display D, to a user's eye through the waveguides included therein as well as transmitting an image of the real world to the user's eye through the area in a see-through manner. In an embodiment, the waveguide may be understood as a part of a lens assembly. The lens assembly (e.g., the lens assembly LA of FIG. 6 or FIG. 8) may include a plurality of lenses (e.g., L1, L2, L3, and L4) and may be disposed in a space within the wearable electronic device 200 in a state aligned with an optical axis (e.g., the optical axis O of FIG. 6 or FIG. 8). The configuration in which visual information output from a display D is provided to a user's eye through a lens assembly will be discussed again below with reference to FIG. 5.

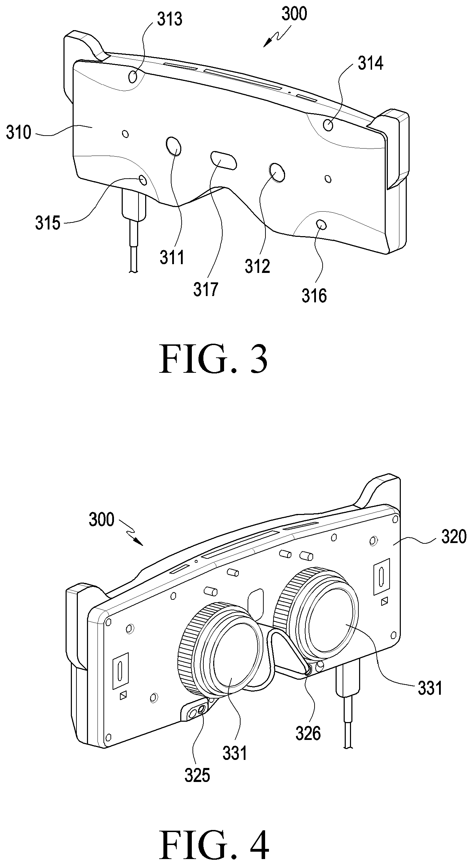

FIGS. 3 and 4 are views illustrating the front and rear sides of a wearable electronic device 300 according to an embodiment.

Referring to FIGS. 3 and 4, in an embodiment, camera modules 311, 312, 313, 314, 315, and 316 and/or a depth sensor 317 configured to acquire information related to the environments surrounding the wearable electronic device 300 may be disposed on a first surface 310 of the electronic device 300 (e.g., a housing).

In an embodiment, the camera modules 311 and 312 may acquire images related to the environments surrounding the wearable electronic device.

In an embodiment, the camera modules 313, 314, 315, and 316 may acquire images while the wearable electronic device is worn by a user. The camera modules 313, 314, 315, and 316 may be used for hand detection and tracking, or user gesture (e.g., hand gesture) recognition. The camera modules 313, 314, 315, and 316 may be used for 3-degree-of-freedom (3DoF) or 6DoF head tracking, position (space, environment) recognition, and/or movement recognition. In an embodiment, the camera modules 311 and 312 may be used for hand detection and tracking, or user gesture recognition or detection.

In an embodiment, the depth sensor 317 may be configured to transmit a signal and receive a signal reflected from a subject, and may be used to identify the distance to an object, such as time of flight (TOF). Instead of or in addition to the depth sensor 317, the camera modules 313, 314, 315, and 316 may identify the distance to an object.

According to an embodiment, face recognition camera modules 325 and 326 and/or displays 331 (and/or lenses) may be disposed on a second surface 320 of the housing.

In an embodiment, the face recognition camera modules 325 and 326 adjacent to the displays may be used to recognize a user's face, or may recognize and/or track both eyes of the user.

In an embodiment, the displays 331 (and/or lenses) may be disposed on the second surface 320 of the wearable electronic device 300. In an embodiment, the displays 331 (and/or lenses) may be at least partially similar to or substantially the same as the displays D (and/or lenses L1, L2, L3, and L4) of FIG. 2. In an embodiment, the wearable electronic device 300 may not include the camera modules 315 and 316 among the plurality of camera modules 313, 314, 315, and 316. Although not illustrated in FIGS. 3 and 4, the wearable electronic device 300 may further include at least one of the components illustrated in FIGS. 1 and/or FIG. 2.

In an embodiment, the display 331 may be understood to include a display module (e.g., the display module 160 of FIG. 1) configured to output a screen and a lens assembly (e.g., the lens assembly LA of FIGS. 6 and 8) configured to focus the output screen onto the user's eye. In FIG. 4, it is to be noted that, in the structure of the displays 331, reference numerals are assigned to portions visible from the exterior of the wearable electronic device 300 and are indicated to the lenses closest to the user's eye.

As described above, according to an embodiment, the wearable electronic device 300 may have a form factor configured to be worn on the user's head. The wearable electronic device 300 may further include a strap and/or a wearing member to be fixed on a portion of the user's body. The wearable electronic device 300 may provide the user experience based on augmented reality, virtual reality, and/or mixed reality while worn on the user's head.

FIG. 5 illustrates a path through which light output by a display D is focused or guided to the user's eye E in the wearable electronic device 300 according to an embodiment of the disclosure.

Referring further to FIG. 5 along with FIG. 2, the wearable electronic device 300 according to an embodiment of the disclosure may include a display D, a lens assembly LA (e.g., the plurality of lenses L1, L2, L3, and L4), one or more quarter-wave plates QWPs 203 and 205, at least one reflective polarizer (RP) 202, and/or at least one beam splitter 204. In an embodiment, the one or more quarter-wave plates 203 and 205, at least one reflective polarizer 202, and/or at least one beam splitter 204 are to be understood as a part of the lens assembly LA. In an embodiment, at least one of the plurality of lenses L1, L2, L3, and L4 may be movable to provide a vision correction function to the user by adjusting a diopter.

According to an embodiment, the one or more quarter-wave plates 203 and 205, the at least one reflective polarizer 202, and the at least one beam splitter 204 may extend and/or adjust a light propagation path length between the user's eye E and the display D. For example, by implementing a focal length longer than the mechanical or physical length of the lens assembly LA, it is possible to improve the quality of images provided to the user. Wearable electronic devices (e.g., AR/VR glasses) are limited in size and weight due to the actual usage environment (e.g., use in the worn state), which may limit the resolution of output virtual images and make it difficult to provide good quality images to the user even through an optical system. According to an embodiment, the wearable electronic device 300, which includes an optical system (e.g., the lens assembly LA) with a pancake lens structure, may increase the optical path length of an incident light beam relative to the external size, and/or improve the resolution of an image provided to the user. For example, the wearable electronic device 300 may serve as an optical device (e.g., AR/VR glasses) that provides visual information while worn on the user's head or face by including the display D and the lens assembly LA.

According to an embodiment, the display D may include a screen display area, which exposes visual information to a portion corresponding to both eyes of the user when the user wears the wearable electronic device 300. In an embodiment, the wearable electronic device 300 may include a pair of displays D corresponding to both eyes of the user. The display D may include, for example, a liquid crystal display (LCD), a light-emitting diode (LED) display, an organic light-emitting diode (OLED) display, a microelectromechanical system (MEMS) display, or an electronic paper display. For example, the display D may display various contents (e.g., texts, images, videos, icons, symbols, or the like) provided to the user as visual information.

According to an embodiment, various contents (e.g., text, image, video, icon, or symbol, or the like) output in the form of light from the display D may pass through the one or more quarter-wave plates 203 and 205, the at least one reflective polarizer 202, the at least one beam splitter 204, and/or the lens assembly LA to be provided to the user's eye. The order in which light passes through the one or more quarter-wave plates 203 and 205, the at least one reflective polarizer 202, the at least one beam splitter 204, and/or the lens assembly LA may be configured in various ways according to the embodiment.

According to an embodiment, a first quarter-wave plate 203 and the reflective polarizer 202 may be disposed on an eye side surface of the first lens L1 among two surfaces of the first lens L1, which is positioned first from the user's eye E in the lens assembly LA (hereinafter, referred to as a "first lens L1"), and the beam splitter 204 may be disposed on one of the two surfaces of the first lens L1 or the second lens L2 (hereinafter, referred to as a "second lens L2") in the lens assembly LA from the user's eye E. For example, in the illustrated embodiment, the beam splitter 204 may be disposed on the display side surface of the second lens L2, and in the embodiment to be described later, the beam splitter may be disposed on the display side surface of the first lens L1. Here, the description "disposed on XX" may refer to being disposed adjacent to or substantially in contact with XX. For example, the beam splitter 204 may be disposed adjacent to the display side surface of the first lens L1 or the second lens L2, or may be provided substantially in contact with the display side surface of the first lens L1 or the second lens L2.

In the illustrated embodiment, among the plurality of lenses (e.g., at least four lenses), the first lens L1 of the wearable electronic device 300 or the lens assembly LA may be understood as the lens disposed furthest from the display D or the lens disposed closest to the user's eye E. It is to be noted, however, that the embodiments of the disclosure are not limited thereto. For example, although not illustrated, the wearable electronic device 300 or the lens assembly LA may further include a transmissive optical member disposed farther from the display D than the first lens L1. In an embodiment, the transmissive optical member may have a refractive power at a level that does not affect the optical performance of the wearable electronic device 300 or 400 of FIG. 6 or FIG. 8 and/or the lens assembly LA, which will be described later. In an embodiment, the transmissive optical member disposed farther from the display D than the first lens L1 may have a transmittance of about 90% or more for visible light. In an embodiment, the transmissive optical member may have a transmittance close to 100% for visible light. In the illustrated embodiment, reference numeral "201" is indicated to exemplify a first polarizer, but in an embodiment, the first polarizer may be omitted. In a structure in which the first polarizer is omitted, reference numeral "201" may be understood as indicating the above-described transmissive optical member. In an embodiment, the transmissive optical member may be disposed between the first lens L1 and the first polarizer 201 or between the reflective polarizer 202 and the first polarizer 201.

FIG. 5 illustrates that the first quarter-wave plate 203 and/or the reflective polarizer 202 are disposed adjacent to (or substantially in contact with) the eye side surface of the two surfaces of the first lens L1, and that the beam splitter 204 is disposed adjacent to (or substantially in contact with) the display side surface of the second lens L2 (or the first lens L1). In an embodiment, the reflective polarizer 202 may be configured in the form of a film, laminated with the first quarter-wave plate 203 to form a first film portion F1 (or the first polarizing plate F1 of FIG. 6), and attached to the first lens L1 from the user's eye. Here, the term "laminated" may mean that two different members are bonded to each other with an adhesive provided on at least one of the members. In an embodiment, when the first quarter-wave plate 203 and/or the reflective polarizer 202 is disposed in contact with a lens (e.g., the first lens L1) (e.g., when attached to one surface of the first lens L1), the surface of the first lens L1, which is in contact with the first quarter-wave plate 203 and/or the reflective polarizer 202, may be implemented as a substantially flat surface.

According to an embodiment, the first film portion F1 in the form in which the first quarter-wave plate 203 and the reflective polarizer 202 are laminated may be thinner and have more excellent optical performance than the film portion with a simple stacked structure. According to an embodiment, as illustrated in FIG. 5, the wearable electronic device 300, the lens assembly LA, and/or the first film portion F1 may further include at least one separately provided polarizing film (e.g., the first polarizer 201), and may further include at least one anti-reflection (AR) film (not illustrated) in addition to or in place of the polarizing film. In an embodiment, when the wearable electronic device 300 and/or the lens assembly LA further includes a transmissive optical member (not illustrated), the transmissive optical member may be disposed between the reflective polarizer 202 and the first polarizer 201. For example, the first polarizer 201 may be understood as part of the first film portion F1 or as a component independent of the first film portion F1.

According to an embodiment, a liquid crystal display, an organic light-emitting diode display, and/or a micro-LED display may provide good quality images by including a polarizer. In an embodiment, when the lens assembly LA further includes the first film portion F1 and/or the first polarizer 201, the image quality perceived by the user may be enhanced even when the display D outputs an image of the same quality. In an embodiment, when a display implemented with an organic light-emitting diode display or micro- LED is combined with the lens assembly LA including the first film portion F1, the second film portion F2, and/or the first polarizer 201, some polarizers may be omitted from the display D. In an embodiment, the lens assembly LA may include the first film portion F1 and/or the first polarizer 201, and the display D may include a polarizer.

Referring to FIG. 5, the first film portion F1 (or the polarizing plate) may be disposed closer to the user's eye E than the lens assembly LA to selectively transmit, reflect, and/or block light (e.g., the light output from the display D) entering the user's eye. The beam splitter 204 may be disposed between the lenses of the lens assembly LA, for example, between the first lens L1 and the second lens L2 or between the second lens L2 and the third lens L3. The beam splitter 204 may be configured to transmit a portion of the light incident on the beam splitter 204 and reflect the remainder of the incident light. For example, the beam splitter 204 may be configured to transmit about 50% of the light and reflect about 50% of the light. In an embodiment, the beam splitter 204 may be configured as, for example, a semi-transparent mirror, and may be configured in the form of a mirror obtained by applying coating to one surface of the first lens L1 or the second lens L2. Hereinafter, based on the functional aspect in which light is reflected, the reflective polarizer 202 may be referred to as a "first reflective member" and the beam splitter 204 may be referred to as a "second reflective member."

In the following description, the direction from the user's eye E toward the display D may be referred to as a first direction, and the direction from the display D toward the user's eye E, opposite to the first direction, may be referred to as a second direction. The first direction and the second direction may be substantially parallel to the optical axis O. The lens assembly LA may include a plurality of lenses (e.g., the first lens L1, the second lens L2, the third lens L3, and the fourth lens L4) sequentially arranged along the first direction.

According to an embodiment, the wearable electronic device 300 may include a second film portion F2 (e.g., the second polarizing plate F2 of FIG. 6) disposed at a position farther from the user's eye E than the lens assembly LA to selectively transmit, reflect, and/or block light entering the lens assembly LA. In the illustrated embodiment, the second film portion F2 may be illustrated as being disposed between the display D and the lens assembly LA (e.g., the fourth lens L4), and in the embodiment to be described later, the second film portion F2 (e.g., the second polarizing plate F2 of FIG. 6) may be illustrated as being disposed between the first lens L1 and the second lens L2. For example, the second film portion F2 may be disposed at any position between the display D and the first lens L1.

According to an embodiment, the second film portion F2 may include a second quarter-wave plate 205 and a second polarizer 206. As in the first film portion F1, the second quarter-wave plate 205 and the polarizer 206 may be combined to implement the second film portion F2. As mentioned above, for the purpose of distinguishing components, the quarter-wave plate 203 of the above-described first film portion F1 may be referred to as a first quarter-wave plate 203, and the quarter-wave plate 205 of the second film portion F2 may be referred to as a second quarter-wave plate 205. In addition, the polarizer 206 of the second film portion F2 may be referred to as a second polarizer 206 to distinguish it from the first polarizer 201 included in the first film portion F1.

According to an embodiment, when the first film portion F1 is disposed adjacent to (or in contact with) the $n^{th}$ lens (here, "n" is a natural number), the second film portion F2 may be disposed on an $(n+1)^{th}$ lens adjacent to the $n^{th}$ lens. The description "disposed on the $(n+1)^{th}$ lens" may be understood as the second film portion F2 being disposed adjacent to or in contact with one of the surfaces of the $(n+1)^{th}$ lens. In an embodiment, the $n^{th}$ lens may be understood as the lens (e.g., the first lens L2) disposed farthest from the display D among the lenses L1, L2, L3, and L4 of the lens assembly LA. The second film portion F2 may be substantially bonded to one of the surfaces of the $(n+1)^{th}$ lens. The surface of the $(n+1)^{th}$ lens, to which the second film portion F2 is attached, may be a substantially flat surface. As will be described later, when the first film portion F2 including the first reflective member (e.g., the reflective polarizer 202) is disposed on the eye side surface of the first lens L1, the second reflective member (e.g., the beam splitter 204) may be disposed on the display side surface of the first lens L1, and the second film portion F2 may be disposed on the eye side surface of the second lens L2.

According to an embodiment, the arrangement of the film portions F1 and F2 and/or the beam splitter 204 may provide good quality images while miniaturizing an optical system implemented with a limited number of lenses (e.g., about 4 lenses). For example, by reducing the number of lenses (or the number of lens surfaces) disposed between the reflective polarizer 202 as the first reflective member and the beam splitter 204 as the second reflective member, it is possible to suppress refraction or scattering in the path of reflected light, and/or birefringence due to manufacturing errors. As previously mentioned, as refraction or scattering increases in the path from a display D to the user's eye E, it is difficult to stabilize optical performance or image quality.

According to an embodiment, the wearable electronic device 300 may operate as follows. The light output from the display D may pass through the second film portion F2, the lens assembly LA, and the first film portion F1, and then reach the user's eye E. In this case, the second polarizer 206 of the second film portion F2 may transmit first linearly polarized light, for example, vertically polarized light (or p-polarized light), and may not transmit second linearly polarized light, for example, horizontally polarized light (or s-polarized light). For example, among the light reaching the second polarizer 206, only vertically polarized light (or p-polarized light) may be transmitted. The light passing through the second polarizer 206 may be converted into circularly polarized light (right-circularly polarized light or left-circularly polarized light) by the second quarter-wave plate 205, and the circularly polarized light may pass through the lens assembly LA and the beam splitter 204 and may then reach the first quarter-wave plate 203. The circularly polarized light reaching the first quarter-wave plate 203 may be converted back into linearly polarized light (e.g., vertically polarized light (or p-polarized light) while passing through the first quarter-wave plate 203 and then reach the reflective polarizer 202. The light may move in the second direction (from the display D to the user's eye E) until reaching the reflective polarizer 202. The light reaching the reflective polarizer 202 may be reflected by the reflective polarizer 202 to be oriented in the first direction (from the user's eye E to the display D), and may be then converted into circularly polarized light (right-circularly polarized light or left-circularly polarized light) while passing through the first quarter-wave plate 203 again. The circularly polarized light (right-circularly polarized light or left-circularly polarized light) may be reflected by the beam splitter 204 to be oriented in the second direction again. In this case, phase conversion may be executed (e.g., left-circularly polarized light may be converted into right-circularly polarized light, and right-circularly polarized light may be converted into left-circularly polarized light). The phase-converted circularly polarized light may pass through the first quarter-wave plate 203 and the reflective polarizer 202 along the second direction and reach the user's eye E. At this time, the light passing through the first quarter-wave plate 203 may be converted into horizontally polarized light (or s-polarized light) and reach the user's eye E. However, the embodiment of FIG. 5 illustrates a change in the state of light passing through the wearable electronic device 300 according to an embodiment by way of an example, in which it is to be noted that the conversion of polarized components by the reflective polarizer 202, the quarter-wave plates 203 and 205, the beam splitter 204, and/or the second polarizer 206 may differ from those in the above-mentioned embodiment.

The embodiment of FIG. 5 illustrates the optical path from the display D to the user's eye E or the polarized states of light passing through (or reflected by) the film portions F1 and F2 or the beam splitter 204. For convenience of description regarding the optical path or polarized state, FIG. 5 illustrates the second film portion F2 as being disposed on the fourth lens L4, but the embodiments of the disclosure are not limited thereto. The first film portion F1 and the second film portion F2 may be disposed between two adjacent lenses (e.g., the first lens L1 and the second lens L2), and the beam splitter 204 may be disposed between the first film portion F1 and the second film portion F2. The arrangement of such film portions F1 and F2 and/or the beam splitter 204 will become clearer through embodiments described below.

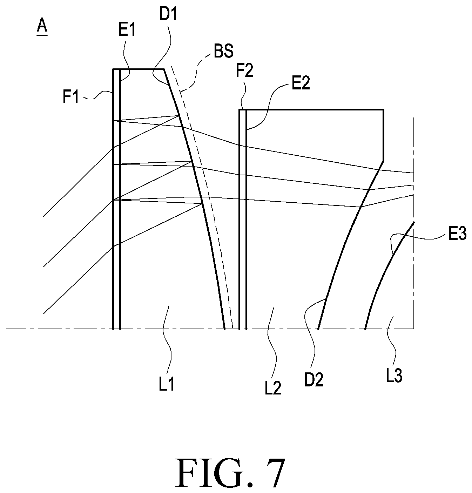

FIG. 6 illustrates a wearable electronic device 400 (e.g., the electronic device 101 of FIG. 1 or the wearable electronic device 200 or 300 of FIGS. 2 to 5) and/or a lens assembly LA according to an embodiment of the disclosure. FIG. 7 illustrates an enlarged view of portion A of FIG. 6 according to an embodiment of the disclosure.

Referring to FIGS. 6 and 7, the wearable electronic device 400 may include a display D and a lens assembly LA, and visual information output from the display D may be focused or guided by the lens assembly LA to be provided to the user's eye E. The lens assembly LA may include a plurality of lenses, for example, at least four lenses L1, L2, L3, and L4 (e.g., the lenses L1, L2, L3, and L4 of FIG. 5) sequentially arranged along the optical axis O. For convenience of description, or as described above, the plurality of lenses L1, L2, L3, and L4 may be distinguished and described by appending ordinals such as "first" or "second" in the order in which they are arranged in a direction from the user's eye E toward the display D. In the reference numerals of the drawings, "Ln" may indicate an $n^{th}$ lens, "En" may indicate an eye side surface of the $n^{th}$ lens, and "Dn" may indicate a display side surface of the $n^{th}$ lens. In an embodiment, the wearable electronic device 400 and/or the lens assembly LA may include polarizing plates F1 and F2 (e.g., the film portions F1 and F2 of FIG. 5) disposed on two adjacent lenses (e.g., the first lens L1 and the second lens L2), and a beam splitter BS (e.g., the beam splitter 204 of FIG. 5) as a reflective member disposed between the polarizing plates F1 and F2.

According to an embodiment, among the polarizing plates F1 and F2, the first polarizing plate F1 (e.g., the first film portion F1 of FIG. 5) may be disposed, for example, on the eye side surface E1 of the first lens L1, and among the polarizing plates F1 and F2, the second polarizing plate F2 (e.g., the second film portion F2 of FIG. 5) may be disposed on one surface (e.g., the eye side surface E2) of the second lens L2. As described above, the beam splitter BS may be disposed between the first polarizing plate F1 and the second polarizing plate F2, for example, on the display side surface D1 of the first lens L1. For example, the wearable electronic device 400 and/or the lens assembly LA may include the first polarizing plate F1, the beam splitter BS, and/or the second polarizing plate F2 sequentially arranged in a direction from the user's eye E toward the display D. In an embodiment, when each of the first polarizing plate F1 and the second polarizing plate F2 is substantially attached to a surface of one of the lenses L1, L2, L3, and L4, the corresponding lens surfaces (e.g., in FIGS. 6 and 8, the eye side surface E1 of the first lens L1 and the eye side surface E2 of the second lens L2) may be substantially flat surfaces.

As described with reference to FIG. 5, light or visual information output from the display D may sequentially pass through the second polarizing plate F2 and the beam splitter BS, and then may be sequentially reflected by the first polarizing plate F1 and the beam splitter BS. The light or visual information reflected by the beam splitter BS may pass through the first polarizing plate F1 to be provided to the user. For example, at least a portion of light or visual information output from the display D may pass through the second polarizing plate F2 and the beam splitter BS to reach the first polarizing plate F1. The first polarizing plate F1 may reflect at least a portion of incident light (e.g., light transmitted through the second polarizing plate F2 and the beam splitter BS), and the beam splitter BS may again reflect at least a portion of the light reflected by the first polarizing plate F1 to guide it to the user's eye E. Thus, visual information output from the display D may be reflected at least twice in a path to reach the user's eye E. Although the lenses L1, L2, L3, and L4 are not mentioned in describing a path of light traveling through the polarizing plates F1 and F2 and/or the beam splitter BS, visual information output from the display D may be focused by the lenses L1, L2, L3, and L4 in a path to reach the user's eye.

According to an embodiment, the term "polarizing plate" may be referred to as a polarizing member, a polarizing film, a polarizing sheet, a polarizing layer, a modulation member, a modulation film, and/or a modulation sheet. Here, the term "modulation" may refer to filtering, reflecting, or refracting at least a portion of incident light, modulating a phase of at least a portion of incident light, and/or delaying a phase of at least a portion of incident light. In an embodiment, a modulation tendency of the polarizing plate may vary depending on a wavelength of incident light or a polarization component of incident light. Such a polarizing plate may be implemented by a film, a sheet, a coating material, and/or a deposition material.

As described with reference to FIG. 5, the first polarizing plate F1 may be disposed on, or in substantial contact with, the eye side surface E1 of the first lens L1. In an embodiment, the first polarizing plate F1 may include a first quarter-wave plate (e.g., the first quarter-wave plate 203 of FIG. 5) and a reflective polarizer (e.g., the reflective polarizer 202 of FIG. 5) disposed to face the first lens L1 with the first quarter-wave plate 203 interposed therebetween. In an embodiment, the first polarizing plate F1 may further include a first polarizer 201. The first polarizer 201 may reduce brightness of an image but may contribute to improving image quality.

According to an embodiment, although not illustrated, the first polarizing plate F1 may further include at least one of an air layer, an adhesive layer, another polarizing layer, and/or a dummy layer disposed between the first quarter-wave plate 203 and the reflective polarizer 202. The air layer, adhesive layer, another polarizing layer, and/or dummy layer disposed between the first quarter-wave plate 203 and the reflective polarizer 202 may substantially have no refractive power. In an embodiment, the description "the first polarizing plate F1 includes an air layer" may refer to a structure in which the first quarter-wave plate 203 and the reflective polarizer 202 are simply stacked. In an embodiment, the description "the first polarizing plate F1 includes an adhesive layer, another polarizing layer, or a dummy layer" may refer to a structure in which the first quarter-wave plate 203 and the reflective polarizer 202 are laminated. When including the first polarizer 201, the first polarizing plate F1 may further include at least one of an air layer, an adhesive layer, another polarizing layer, and/or a dummy layer disposed between the reflective polarizer 202 and the first polarizer 201. In an embodiment, when including the first polarizer 201, the first polarizing plate F1 may further include a transmissive optical member (not illustrated) disposed between the first polarizer 201 and the reflective polarizer 202. The transmissive optical member may protect one or more lenses (e.g., lenses L1, L2, L3, L4) or one or more polarizers (e.g., the wave plates 203 and 205, the polarizers 202 and 206, and/or the beam splitter 204) disposed between the display D and the transmissive optical member. In an embodiment, the transmissive optical member may have no refractive power. In an embodiment, the dummy layer may be any one of substantially transmissive optical members.

According to an embodiment, the second polarizing plate F2 may be disposed on, or in substantial contact with, the eye side surface E2 of the second lens L2. In an embodiment, the second polarizing plate F2 may include a second polarizer (e.g., the second polarizer 206 of FIG. 5) and a second quarter-wave plate (e.g., the second quarter-wave plate 205 of FIG. 5) disposed to face the second lens L2 with the second polarizer 206 interposed therebetween. In arranging the second polarizer 206 and the second quarter-wave plate 205, the polarization axis of light linearly polarized by the second polarizer 206 and the fast axis of the second quarter-wave plate 205 may form an angle of 45 degrees. For example, the second polarizing plate F2 may be configured to convert linearly polarized light into circularly polarized light. In an embodiment, when the first polarizing plate F1 includes the first polarizer 201, the polarization axis of the first polarizer 201 and the polarization axis of the second polarizer 206 may form an angle of 90 degrees. In an embodiment, the fast axis of the first quarter-wave plate 203 and the fast axis of the second quarter-wave plate 205 may form an angle of 90 degrees.

In the above-described embodiment, the first polarizing plate F1 is mentioned as being disposed on the first lens L1, and the second polarizing plate F2 is mentioned as being disposed on the second lens L2. However, it should be noted that the embodiment(s) of the disclosure are not limited thereto. For example, the first polarizing plate F1 may be disposed on an $n^{th}$ lens, which is any one of the first lens L1, the second lens L2, and/or the third lens L3, and when the first polarizing plate F1 is disposed on the $n^{th}$ lens, the second polarizing plate F2 may be disposed on an $(n+1)^{th}$ lens, which is any one of the second lens L2, the third lens L3, and/or the fourth lens L4. For example, in an embodiment of the disclosure, one of the plurality of lenses L1, L2, L3, and L4 may be disposed between the first polarizing plate F1 and the second polarizing plate F2. In an embodiment, it may be understood that the first polarizing plate F1 and the second polarizing plate F2 are disposed with one of the plurality of lenses L1, L2, L3, and L4 interposed therebetween.

According to an embodiment, although not illustrated, the second polarizing plate F2 may further include at least one of an air layer, an adhesive layer, another polarizing layer, and/or a dummy layer disposed between the second quarter-wave plate 205 and the second polarizer 206. A configuration in which the second polarizing plate F2 further includes at least one of an air layer, an adhesive layer, another polarizing layer, and/or a dummy layer disposed between the second quarter-wave plate 205 and the second polarizer 206 may be similar to the configuration of the first polarizing plate F1, and thus a detailed description thereof will be omitted.

According to an embodiment, the beam splitter BS may be provided on the $n^{th}$ lens, for example, on a lens adjacent to (or substantially in contact with) the first polarizing plate F1 (e.g., the first lens L1). In an embodiment, when the first polarizing plate F1 is provided on the eye side surface E1 of the first lens L1, the beam splitter BS may be provided on the display side surface D1 of the first lens L1. In an embodiment, the beam splitter BS may be formed in contact with the display side surface D1 of the first lens L1 by substantially depositing or coating an optical material. In an embodiment, by arranging the first polarizing plate F1 and the beam splitter BS functioning as reflective members, the optical length of the lens assembly LA may become greater than the mechanical (or physical) length, while minimizing the number of lenses (or lens surfaces) disposed between the first polarizing plate F1 and the beam splitter BS. For example, in a miniaturized structure of the lens assembly LA, the optical length may be sufficiently secured by the reflective members (e.g., the first polarizing plate F1 and the beam splitter BS), and by reducing the number of lenses or lens surfaces disposed between the reflective members (e.g., the first polarizing plate F1 and the beam splitter BS), refraction or scattering may be suppressed, and the lens assembly LA may provide improved image quality. In an embodiment, the above-described "refraction or scattering" may refer to birefringence caused by manufacturing errors or errors generated in the assembly process within an allowable tolerance. For example, by reducing the number of lenses or lens surfaces disposed between the reflective members (e.g., the first polarizing plate F1 and the beam splitter BS), birefringence of the lenses may be suppressed, and the lens assembly LA may provide improved image quality.

According to an embodiment, when the light passes through the polarizing plates F1 and F2 and/or the beam splitter BS and then passes through one or more lenses L1, L2, L3, and L4 (or lens surfaces), birefringence may distort polarization properties. In an embodiment, when polarization properties are distorted, a flare phenomenon may increase and image quality may deteriorate. In one or more embodiments of the disclosure, the optical length may be increased by using the polarizing plates F1 and F2 and/or the beam splitter BS, and by arranging the polarizing plates F1 and F2 and/or the beam splitter BS close to the user's eye and/or minimizing the number of one or more lenses L1, L2, L3, and L4 (or lens surfaces) disposed between the polarizing plates F1 and F2 and/or the beam splitter BS, birefringence in a path reaching the user's eye after passing through the polarizing plates F1 and F2 and/or the beam splitter BS may be suppressed.

According to an embodiment, in the structure in which the polarizing plates F1 and F2 and/or the beam splitter BS are disposed as described above, among at least four lenses L1, L2, L3, and L4, the eye side first lens (e.g., the first lens L1) may have a positive refractive power. When the first lens L1 has a positive refractive power and the display side first lens (e.g., the fourth lens L4 when including four lenses L1, L2, L3, and L4) has a positive refractive power, miniaturization of the lens assembly LA and/or the wearable electronic device 400 including the same may be facilitated. In an embodiment, among the plurality of lenses L1, L2, L3, and L4, at least one lens having a negative refractive power may be disposed between the first lens L1 and the display side first lens (e.g., the fourth lens L4). In an embodiment, the second polarizing plate F2 may be disposed between the first lens L1 and the eye side first lens among the lenses having a negative refractive power. In the embodiment of FIG. 6 or FIG. 7, the second polarizing plate F2 may be disposed on the second lens L2 having a negative refractive power. For example, the second polarizing plate F2 may be disposed adjacent to (or substantially in contact with) the eye side surface E2 of the second lens L2. In an embodiment, the second polarizing plate F2 may be understood as being disposed closer to the display D than the first polarizing plate F1 and/or the beam splitter BS.

According to an embodiment, the lens assembly LA may satisfy conditions presented through the following Mathematical Expression 1.

$$[\text{Mathematical Expression 1}]$$
$$1.0 \leq TTL/DSP \leq 1.8$$

Here, "TTL" is a distance (e.g., a lens length) from the eye side surface E1 of the first lens L1 to the display D, and "DSP" may be a diagonal length of the display D. In an embodiment, when a calculated value of Mathematical Expression 1 is less than 1.0, miniaturization may be facilitated, but aberration control may be difficult, and thus there may be a limitation in securing stable optical performance. In an embodiment, when a calculated value of Mathematical Expression 1 is greater than 1.8, securing optical performance may be facilitated, but miniaturization may be difficult. For example, Mathematical Expression 1 may present conditions under which the lens assembly LA may be miniaturized while providing good image quality.

In an embodiment, the lens assembly LA may satisfy conditions presented through the following Mathematical Expression 2.

$$[\text{Mathematical Expression 2}]$$
$$0.2 \leq Nvd/Pvd \leq 0.5$$

Here, "Pvd" is an Abbe number of a lens having a positive refractive power and disposed closest to the user's eye or a lens on which the first polarizing plate F1 (and/or the beam splitter BS) is disposed. In the embodiment of FIG. 6, the Pvd may be the Abbe number of the first lens L1. In Mathematical Expression 2, "Nvd" is an Abbe number of a lens having a negative refractive power and disposed closest to the user's eye or a lens on which the second polarizing plate F2 is disposed. In the embodiment of FIG. 6, the Nvd may be the Abbe number of the second lens L2. In an embodiment, by satisfying the conditions of Mathematical Expression 2 regarding Abbe numbers of lenses (e.g., the first lens L1 and the second lens L2), chromatic aberration control of the lens assembly LA may be facilitated. For example, the lens assembly LA may provide stable optical performance by satisfying the conditions of Mathematical Expression 2.

According to an embodiment, the lens assembly LA may satisfy conditions presented through the following Mathematical Expression 3.

$$[\text{Mathematical Expression 3}]$$
$$0.1 \leq efl/Nefl \leq 0.8$$

Here, "Nefl" is an absolute value of a focal length of a lens having a negative refractive power and disposed closest to the user's eye (e.g., the second lens L2 of FIG. 6), and "efl" may be a focal length of the lens assembly LA. In an embodiment, Mathematical Expression 3 regarding focal length presents conditions related to a refractive power of a lens having a negative refractive power and disposed closest to the user's eye (e.g., the second lens L2 of FIG. 6), and by satisfying the conditions of Mathematical Expression 3, the lens assembly LA may facilitate aberration control and provide stable optical performance.

In an embodiment, the lens assembly LA as described above may provide favorable wide-angle or ultra-wide-angle performance by having a field of view (FOV) of about 90 degrees or more. In an embodiment, the eye side surface E1 of the first lens L1 may be convex, and in this case, the first polarizing plate F1 may be disposed adjacent to the eye side surface E1 of the first lens L1. In an embodiment, in suppressing manufacturing or assembly tolerances, the polarizing plates F1 and F2 may be attached to corresponding ones of at least four lenses L1, L2, L3, and L4. Among the lenses L1, L2, L3, and L4, the surfaces to which the polarizing plates F1 and F2 are attached may be substantially flat surfaces.

According to an embodiment, the lens assembly LA of FIG. 6 or FIG. 7 may include a first lens L1 having a positive refractive power, a second lens L2 having a negative refractive power, a third lens L3 having a positive refractive power, and/or a fourth lens L4 having a positive refractive power. In an embodiment, the lens assembly LA may have a field of view of about 90 degrees, a focal length of about 14.62 mm, and an F-number of about 3.65. In an embodiment, a maximum image height of the lens assembly LA may be about 12.56 mm, where the "maximum image height" may refer to a maximum distance from a point where the optical axis O of the lens assembly LA passes through an active area of the display D to an edge of the active area. In an embodiment, the maximum image height of the lens assembly LA may be half of a diagonal length DSP of the display mentioned in Mathematical Expression 1.

In an embodiment, the lens assembly LA may be manufactured with specifications presented in Table 1 and may have aspherical coefficients of Table 2. The definition of the aspherical surface may be calculated through the following Mathematical Expression 4. In Table 1, "REF." illustrates reference numerals assigned to the lenses L1, L2, L3, and L4 and/or the polarizing plates F1 and F2 of FIG. 6, and "lens surface" denotes an ordinal number assigned to a lens surface or a surface of a polarizing plate that transmits (or reflects) visual information, in which ordinal numbers may be sequentially assigned in a reverse direction of an optical path from the display to the user's eye. The "display window" in Table 1 (e.g., "W" of FIG. 6) may be a substantially transparent plate for protecting the display.

In the structure of the lens assembly LA of FIG. 6, light guided to the user's eye may pass twice through the eye side surface E1 of the first lens L1, and may pass once and may be reflected once at the display side surface D1 of the first lens L1. For example, in Table 1, the lens surfaces 3 and 7 may substantially correspond to the eye side surface E1 of the first lens L1, and the lens surfaces 4 and 8 may substantially correspond to the display side surface D1 of the first lens L1. In an embodiment, based on the data of Table 1, it may be understood that the first polarizing plate F1 is substantially attached to the eye side surface E1 of the first lens L1, and the second polarizing plate F2 is substantially attached to the eye side surface E2 of the second lens L2. Although no separate lens surface number is assigned, the beam splitter BS may be provided between the first lens L1 and the second polarizing plate F2, for example, on the display side surface D1 of the first lens L1.

[Mathematical Expression 4]

$$z = \frac{c'y^2}{1+\sqrt{1-(k+1)c'^2y^2}} + Ay^4 + By^6 + Cy^8 + Dy^{10} + Ey^{12} + Fy^{14} + Gy^{16} + Hy^{18} + Jy^{20} + Ky^{22} + Ly^{24} + My^{26} + Ny^{28} + Oy^{30}$$

In Mathematical Expression 4, "z" may denote a distance in an optical axis O direction from a point where the optical axis O passes through a lens surface, "y" may denote a distance in a direction perpendicular to the optical axis O from the optical axis O, "c" may denote a reciprocal of a radius of curvature at a vertex of a lens, "k" may denote a conic constant, and "A," "B," "C," "D," "E," "F," "G," "H," "J," "K," "L," "M," "N," and "O" may each denote an aspherical coefficient. The "reciprocal of the radius of curvature" may represent a value indicating the degree of curvature at each point of a curved surface or curve (e.g., curvature). Among the aspherical coefficients of Mathematical Expression 4, any aspherical coefficient having a value of zero may be omitted from Table 2 or Table 4 described below.

[Table 1]

| REF. | Lens surface (surface) | Curvature radius (radius) | Thickness (thick) | Material | Refractive index (nd) | Abbe number (vd) | Refraction mode |
|---|---|---|---|---|---|---|---|
| | E | infinity | infinity | | | | refraction |
| | Stop | infinity | 12 | | | | refraction |
| F1 | 2 | infinity | 0.31 | Film | 1.51958 | 64.2 | refraction |

(continued)

| REF. | Lens surface (surface) | Curvature radius (radius) | Thickness (thick) | Material | Refractive index (nd) | Abbe number (vd) | Refraction mode |
|---|---|---|---|---|---|---|---|
| L1 | 3 | infinity | 4.589805 | 'A551425' | 1.54756 | 56.09 | refraction |
| | 4 | -50.9713 | -4.589805 | 'A551425' | 1.54756 | 56.09 | reflection |
| F1 | 5 | infinity | -0.31 | Film | 1.51958 | 64.2 | refraction |
| | 6 | infinity | 0.31 | Film | 1.51958 | 64.2 | reflection |
| L1 | 7 | infinity | 4.589805 | 'A551425' | 1.54756 | 56.09 | refraction |
| | 8 | -50.9713 | 0.15 | | | | refraction |
| F2 | 9 | infinity | 0.25 | Film | 1.51958 | 64.2 | refraction |
| L2 | 10 | infinity | 2.137996 | 'EP800025' | 1.6719 | 20.37 | refraction |
| | 11 | 32.97802 | 2.187813 | | | | refraction |
| L3 | 12 | 128.0315 | 3.848003 | 'A551425' | 1.54756 | 56.09 | refraction |
| | 13 | -221.006 | 0.15 | | | | refraction |
| L4 | 14 | 12.28511 | 3.726384 | 'A551425' | 1.54756 | 56.09 | refraction |
| | 15 | 34.56479 | 0.4 | | | | refraction |
| Display window | 16 | infinity | 0.6 | BSC7 HOYA | 1.51958 | 64.2 | refraction |
| | 17 | infinity | 0.101817 | | | | refraction |
| | display | infinity | 0 | | | | |

[Table 2]

| | 4 | 11 | 12 | 13 | 14 | 15 |
|---|---|---|---|---|---|---|
| Curvature radius (radius) | -50.9713 | 32.97802 | 128.0315 | -221.006 | 12.28511 | 34.56479 |
| k (conic) | -0.83475 | 0.043908 | 51.2242 | -66.1717 | -0.4614 | -90 |
| A | 3.82E-06 | 2.40E-05 | 0.000219 | -0.00011 | -0.00027 | -0.00023 |
| B | -5.08E-08 | 7.21E-08 | -1.62E-06 | 3.73E-06 | 2.07E-06 | 1.02E-06 |
| C | 4.27E-10 | 8.44E-10 | 1.59E-08 | -2.78E-08 | -2.37E-08 | 4.38E-09 |
| D | -2.08E-12 | -4.60E-12 | -9.90E-11 | 8.20E-11 | 1.06E-10 | -1.96E-11 |
| E | 5.39E-15 | -6.28E-14 | 3.48E-13 | -1.18E-13 | -3.20E-13 | -7.35E-14 |
| F | -5.63E-18 | 2.29E-16 | -7.33E-16 | 2.74E-16 | 9.26E-16 | 3.23E-16 |

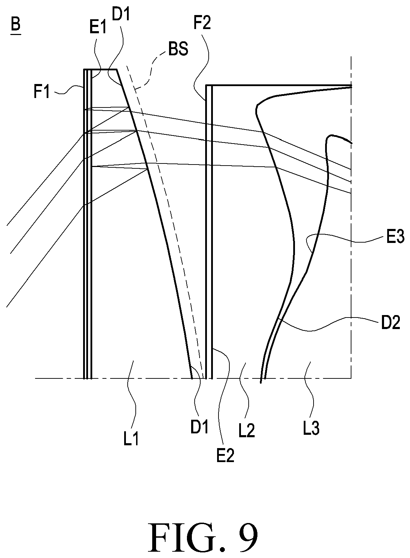

FIG. 8 illustrates a wearable electronic device 500 (e.g., the electronic device 101 of FIG. 1 or the wearable electronic device 200 or 300 of FIGS. 2 to 5) and/or a lens assembly LA according to an embodiment of the disclosure. FIG. 9 illustrates an enlarged view of portion B of FIG. 8 according to an embodiment of the disclosure.

According to an embodiment, the lens assembly LA of FIG. 8 or FIG. 9 may include a first lens L1 having a positive refractive power, a second lens L2 having a negative refractive power, a third lens L3 having a positive refractive power, and/or a fourth lens L4 having a positive refractive power. In an embodiment, the lens assembly LA may have a field of view of about 110 degrees, a focal length of about 14.1975 mm, and an F-number of about 2.86. In an embodiment, a maximum image height of the lens assembly LA may be about 12.56 mm. In an embodiment, the lens assembly LA may be manufactured with specifications presented in Table 3 and may have aspherical coefficients of Table 4. In Table 3, "REF." illustrates reference numerals assigned to the lenses L1, L2, L3, and L4 and/or the polarizing plates F1 and F2 of FIG. 8, and "lens surface" denotes an ordinal number assigned to a lens surface or a surface of a polarizing plate that transmits (or reflects) visual information, in which ordinal numbers may be sequentially assigned in a reverse direction of an optical path from the display to the user's eye. The "display window" in Table 3 (e.g., "W" of FIG. 8) may be a substantially transparent plate for protecting the display, and the "polarizing film" in Table 3 may refer to a polarizing film indicated by "P" of FIG. 8.

The lens assembly LA of FIG. 8 may illustrate a structure in which the display D further includes a polarizing plate, regardless of whether the first polarizing plate F1 includes a first polarizer (e.g., the first polarizer 201 of FIG. 5).

According to an embodiment, in the lens assembly LA of FIG. 8 or FIG. 9, the first polarizing plate F1 may be disposed adjacent to the eye side surface E1 of the first lens L1 at a distance of about 0.265 mm. In Table 3, the lens surfaces 4, 6, and 8 may substantially correspond to the eye side surface E1 of the first lens L1. In the lens assembly LA of FIG. 8 or FIG. 9, the second polarizing plate F2 may be understood as being substantially attached to the eye side surface E2 of the second lens L2. Although no separate lens surface number is assigned, the beam splitter may be provided between the first lens L1 and the second polarizing plate F2, for example, on the display side surface D1 (e.g., the lens surfaces 5 and 9) of the first lens L1.

[Table 3]

| REF. | Lens surface (surface) | Curvature radius (radius) | Thickness (thick) | Material | Refractive index (nd) | Abbe numbe r (vd) | Refraction mode |
|---|---|---|---|---|---|---|---|
| | eye | infinity | infinity | | | | refraction |
| | Stop | infinity | 12.2 | | | | refraction |
| F1 | 2 | infinity | 0.1023 | Film | 1.49472 | 57.47 | refraction |
| | 3 | infinity | 0.265 | Film | 1.49472 | 57.47 | refraction |
| L1 | 4 | infinity | 5 | 'opti6025' | 1.49894 | 57.66 | refraction |
| | 5 | -51.6745 | -5 | 'opti6025' | 1.49894 | 57.66 | reflection |
| L1 (4) | 6 | infinity | -0.265 | Film | 1.49472 | 57.47 | refraction |
| F1 (3) | 7 | infinity | 0.265 | Film | 1.49472 | 57.47 | reflection |
| L1 | 8 | infinity | 5 | 'opti6025' | 1.49894 | 57.66 | refraction |
| | 9 | -51.6745 | 0.16 | | | | refraction |
| F2 | 10 | infinity | 0.2016 | Film | 1.49472 | 57.47 | refraction |
| L2 | 11 | infinity | 1.6 | 'EP800025' | 1.6719 | 20.37 | refraction |
| | 12 | 59.85505 | 0.25 | | | | refraction |
| L3 | 13 | 370.0365 | 5.415 | 'K26R25' | 1.53815 | 55.71 | refraction |
| | 14 | -54.0413 | 0.145 | | | | refraction |
| L4 | 15 | 22 | 4.298 | 'K26R25' | 1.53815 | 55.71 | refraction |
| | 16 | -25.5565 | 0.596 | | | | refraction |
| polarizi ng film | 17 | infinity | 0.2016 | Film | 1.49472 | 57.47 | refraction |
| Display window | 18 | infinity | 0.7 | BSC7_HO YA | 1.51958 | 64.2 | refraction |
| | 19 | infinity | -0.0002 | | | | refraction |
| | display | infinity | 0 | | | | |

[Table 4]

| | 5 | 12 | 13 | 14 | 15 | 16 |
|---|---|---|---|---|---|---|
| Curvature radius (radius) | -51.6745 | 59.85505 | 370.0365 | -54.0413 | 22 | -25.5565 |
| K | -0.52531 | -99 | 0 | -99 | -1.46091 | 0 |
| A | 5.21E-06 | 0.000682 | 0.001015 | -0.00026 | -0.00051 | 0.002074 |
| B | -9.32E-08 | -2.27E-05 | -3.29E-05 | 9.97E-06 | 1.39E-05 | -9.21E-05 |
| C | 1.08E -09 | 4.17E-07 | 5.62E-07 | -2.07E-07 | -1.25E-07 | 2.08E-06 |
| D | -5.46E-12 | -4.32E-09 | -5.23E-09 | 2.74E-09 | -9.94E-10 | -2.78E-08 |
| E | 1.02E-15 | 2.64E-11 | 2.77E-11 | -2.31E-11 | 2.83E-11 | 2.32E-10 |

(continued)

|  | 5 | 12 | 13 | 14 | 15 | 16 |
|---|---|---|---|---|---|---|
| F | 1.15E-16 | -9.84E-14 | -8.31E-14 | 1.21E-13 | -2.37E-13 | -1.21E-12 |
| G | -5.04E-19 | 2.21E-16 | 1.31E-16 | -3.83E-16 | 1.00E-15 | 3.86E-15 |
| H | 8.90E-22 | -2.74E-19 | -7.99E-20 | 6.60E-19 | -2.15E-18 | -6.83E-18 |
| J | -5.81E-25 | 1.45E-22 | -8.10E-24 | -4.78E-22 | 1.88E-21 | 5.17E-21 |

Table 5 below presents calculated values of Mathematical Expression 1, Mathematical Expression 2, and/or Mathematical Expression 3 based on specifications of the lens assembly LA of FIG. 6 or FIG. 8.

[Table 5]

|  | Embodiment of FIG. 6 | Embodiment of FIG. 8 |
|---|---|---|
| Calculated value of Mathematical Expression 1 | 1.469 | 1.507 |
| Calculated value of Mathematical Expression 2 | 0.363 | 0.353 |
| Calculated value of Mathematical Expression 3 | 0.298 | 0.159 |

The lens assembly (e.g., the lens assembly LA of FIG. 2, FIG. 5, FIG. 6, or FIG. 8) according to one or more embodiments of the disclosure and/or a wearable electronic device including the same (e.g., the electronic device 101 of FIG. 1 or the wearable electronic device 200, 300, 400, or 500 of FIGS. 2 to 6 or FIG. 8) may be miniaturized while implementing good image quality with facilitated aberration control by satisfying at least some of the above-described specifications or conditions. For example, even when used in a state of being worn on the user's head or face, the lens assembly and/or the wearable electronic device including the same may reduce user fatigue.

The effects capable of being obtained by the disclosure are not limited to those described above, and other effects not described above may be clearly understood by a person ordinarily skilled in the art to which the disclosure belongs from the descriptions of one or more embodiments described above.

According to an embodiment of the disclosure, a wearable electronic device (e.g., the electronic device 101 of FIG. 1, or the wearable electronic device 200, 300, 400, or 500 of FIGS. 2 to 6 or FIG. 8) may include a display (e.g., the display module 160 of FIG. 1, the displays D and 331 of FIGS. 2 to 6 or FIG. 8) configured to output visual information, and a lens assembly (e.g., the lens assembly LA of FIG. 5, FIG. 6, or FIG. 8) configured to focus or guide the visual information output from the display. In an embodiment, the lens assembly may include at least four lenses (e.g., the lenses L1, L2, L3, and L4 of FIG. 5, FIG. 6, or FIG. 8) sequentially arranged along an optical axis (e.g., the optical axis O of FIG. 6 or FIG. 8) in a direction toward the display, a first polarizing plate (e.g., the first film portion F1 of FIG. 5, or the first polarizing plate F1 of FIG. 6 or FIG. 8) disposed on an eye side surface of one of the at least four lenses (hereinafter referred to as an $n^{th}$ lens) (e.g., the first lens L1 of FIG. 5, FIG. 6, or FIG. 8), a beam splitter (e.g., the beam splitter 204 of FIG. 5, or the beam splitter BS of FIG. 6 or FIG. 8) disposed on a display side surface of the $n^{th}$ lens, and a second polarizing plate (e.g., the second polarizing plate F2 of FIG. 6 or FIG. 8) disposed on an eye side surface of an $(n+1)^{th}$ lens (e.g., the second lens L2 of FIG. 6 or FIG. 8). Among the at least four lenses, the $(n+1)^{th}$ lens is disposed adjacent to the $n^{th}$ lens between the $n^{th}$ lens and the display. In an embodiment, the first polarizing plate may be configured to reflect at least a portion of visual information output from the display, and the beam splitter may be configured to reflect at least a portion of the visual information reflected by the first polarizing plate.

According to an embodiment, the $n^{th}$ lens may be disposed farthest from the display among the at least four lenses and may have a positive refractive power.

According to an embodiment, the $n^{th}$ lens, which is a lens having a positive refractive power, may be disposed farthest from the display among the at least four lenses, and the $(n+1)^{th}$ lens may have a negative refractive power.

According to an embodiment, among the at least four lenses, a lens (e.g., the fourth lens L4 of FIG. 6 or 8) disposed between the $(n+1)^{th}$ lens and the display and positioned closest to the display may have a positive refractive power.

According to an embodiment, at least one of an eye side surface of the $n^{th}$ lens or an eye side surface of the $(n+1)^{th}$ lens may be a flat surface. In an embodiment, the lens assembly may have a field of view (FOV) of 90 degrees or more.

According to an embodiment, the first polarizing plate may include a reflective polarizer (e.g., the reflective polarizer 202 of FIG. 5) and a first quarter-wave plate (e.g., the first quarter-wave plate 203 of FIG. 5) disposed between the reflective polarizer and the $n^{th}$ lens.

According to an embodiment, the first polarizing plate may further include at least one of an air layer, an adhesive layer, another polarizing layer, or a dummy layer disposed between the reflective polarizer and the first quarter-wave plate.

According to an embodiment, the first polarizing plate may further include a first polarizer (e.g., the first polarizer 201 of FIG. 5) disposed to face the first quarter-wave plate with the reflective polarizer interposed therebetween.

According to an embodiment, the first polarizing plate may further include a transmissive optical member disposed between the first polarizer and the reflective polarizer.

According to an embodiment, the second polarizing plate may include a second quarter-wave plate (e.g., the second quarter-wave plate 205 of FIG. 5) and a second polarizer (e.g., the second polarizer 206 of FIG. 5) disposed between the second quarter-wave plate and the $(n+1)^{th}$ lens.

According to an embodiment, the second polarizing plate may further include at least one of an air layer, an adhesive layer, another polarizing layer, or a dummy layer disposed between the second polarizer and the second quarter-wave plate.

According to an embodiment, a polarization axis of light linearly polarized by the second polarizer and a fast axis of the second quarter-wave plate may form an angle of 45 degrees, so that the second polarizing plate may be configured to convert the linearly polarized light into circularly polarized light.

According to an embodiment, the first polarizing plate may include a first polarizer, and the second polarizing plate may include a second polarizer. In an embodiment, a polarization axis of the first polarizer and a polarization axis of the second polarizer may form an angle of 90 degrees.

According to an embodiment, the first polarizing plate may include a first quarter-wave plate, and the second polarizing plate may include a second quarter-wave plate. In an embodiment, a fast axis of the first quarter-wave plate and a fast axis of the second quarter-wave plate may form an angle of 90 degrees.

According to an embodiment, the lens assembly may satisfy the following Conditional Expression 1:

$$[\text{Conditional Expression 1}]$$

$$1.0 \leq \text{TTL/DSP} \leq 1.8$$

Here, TTL is a distance from an eye side surface of a lens farthest from the display to the display, and DSP may be a diagonal length of the display.

According to an embodiment, the lens assembly may satisfy the following Conditional Expression 2 regarding an Abbe number Pvd of the $n^{th}$ lens and an Abbe number Nvd of the $(n+1)^{th}$ lens:

$$[\text{Conditional Expression 2}]$$

$$0.1 \leq \text{Nvd/Pvd} \leq 0.5$$

According to an embodiment, the lens assembly may satisfy the following Conditional Expression 3 regarding an overall effective focal length efl and an absolute value Nefl of an effective focal length of the $(n+1)^{th}$ lens:

$$[\text{Conditional Expression 3}]$$

$$0.1 \leq \text{efl/Nefl} \leq 0.8$$

According to an embodiment of the disclosure, a wearable electronic device (e.g., the electronic device 101 of FIG. 1, or the wearable electronic device 200, 300, 400, or 500 of FIGS. 2 to 6 or FIG. 8) may include a display (e.g., the display module 160 of FIG. 1, the displays D and 331 of FIGS. 2 to 6 or FIG. 8) configured to output visual information, and a lens assembly (e.g., the lens assembly LA of FIG. 5, FIG. 6, or FIG. 8) configured to focus or guide the visual information output from the display. In an embodiment, the lens assembly may include at least four lenses (e.g., the lenses L1, L2, L3, and L4 of FIG. 5, FIG. 6, or FIG. 8) sequentially arranged along an optical axis (e.g., the optical axis O of FIG. 6 or FIG. 8) toward the display, a first polarizing plate (e.g., the first film portion F1 of FIG. 5, or the first polarizing plate F1 of FIG. 6 or FIG. 8) disposed on an eye side surface of one of the at least four lenses (hereinafter referred to as an $n^{th}$ lens) (e.g., the first lens L1 of FIG. 5, FIG. 6, or FIG. 8), wherein the first polarizing plate includes a reflective polarizer (e.g., the reflective polarizer 202 of FIG. 5) and a first quarter-wave plate (e.g., the first quarter-wave plate 203 of FIG. 5) disposed between the reflective polarizer and the $n^{th}$ lens, a beam splitter (e.g., the beam splitter 204 of FIG. 5, or the beam splitter BS of FIG. 6 or FIG. 8) disposed on a display side surface of the $n^{th}$ lens, and a second polarizing plate (e.g., the second film portion F2 of FIG. 5, or the second polarizing plate F2 of FIG. 6 or FIG. 8) disposed on an eye side surface of an $(n+1)^{th}$ lens disposed adjacent to the nth lens between the nth lens and the display among the at least four lenses, wherein the second polarizing plate includes a second quarter-wave plate (e.g., the second quarter-wave plate 205 of FIG. 5) and a second polarizer (e.g., the second polarizer 206 of FIG. 5) disposed between the second quarter-wave plate and the (n+1)th lens. In an embodiment, the nth lens may have a positive refractive power, the (n+1)th lens may have a negative refractive power, and among the at least four lenses, a lens, which is disposed between the (n+1)th lens and the display and positioned closest to the display, may have a positive refractive power.

According to an embodiment, the lens assembly may satisfy the following Conditional Expression 1:

$$[\text{Conditional Expression 1}]$$
$$1.0 \leq \text{TTL/DSP} \leq 1.8$$

where TTL is a distance from an eye side surface of a lens farthest from the display to the display, and DSP may be a diagonal length of the display.

According to an embodiment, the lens assembly may satisfy the following Conditional Expression 2 regarding an Abbe number Pvd of the nth lens and an Abbe number Nvd of the (n+1)th lens:

$$[\text{Conditional Expression 2}]$$
$$0.1 \leq \text{Nvd/Pvd} \leq 0.5$$

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

**Claims**

1. A wearable electronic device (101; 200; 300; 400; 500) comprising:

   a display (160, D) configured to output visual information; and
   a lens assembly (LA) configured to focus or guide the visual information output from the display,
   wherein the lens assembly (LA) comprises:

      at least four lenses (L1, L2, L3, L4) sequentially arranged along an optical axis (O) toward the display,
      a first polarizing plate (F1) disposed on an eye side surface of one of the at least four lenses (hereinafter, referred to as a "nth lens"),
      a beam splitter (204; BS) disposed on a display side surface of the nth lens, and
      a second polarizing plate (F2) disposed on an eye side surface of an (n+1)th lens among the at least four lenses, wherein the (n+1)th lens is disposed adjacent to the nth lens between the nth lens and the display, and

      wherein the first polarizing plate is configured to reflect at least a portion of the visual information output from the display, and the beam splitter is configured to reflect at least a portion of the visual information reflected by the first polarizing plate.

2. The wearable electronic device of claim 1, wherein among the at least four lenses, the nth lens (L1) is disposed farthest from the display and has a positive refractive power,

   wherein the (n+1)th lens (L2) has a negative refractive power, and
   wherein among the at least four lenses, a lens (L4) disposed closest to the display between the (n+1)th lens and the display has a positive refractive power.

3. The wearable electronic device of any one of claims 1 and 2, wherein at least one of the eye side surface of the nth lens or the eye side surface of the (n+1)th lens is a flat surface, and
wherein the lens assembly has a field of view (FOV) of 90 degrees or more.

4. The wearable electronic device of any one of claims 1 to 3, wherein the first polarizing plate comprises:

   a reflective polarizer (202); and
   a first quarter-wave plate (203) disposed between the reflective polarizer and the nth lens.

5. The wearable electronic device of claim 4, wherein the first polarizing plate comprises at least one of an air layer, an adhesive layer, another polarizing layer, or a dummy layer disposed between the reflective polarizer and the first quarter-wave plate.

6. The wearable electronic device of any one of claims 4 and 5, wherein the first polarizing plate further comprises a first polarizer disposed to face the first quarter-wave plate with the reflective polarizer interposed therebetween.

7. The wearable electronic device of claim 6, wherein the first polarizing plate further comprises a transmissive optical member disposed between the first polarizer and the reflective polarizer.

8. The wearable electronic device of any one of claims 1 to 7, wherein the second polarizing plate comprises:

   a second quarter-wave plate (205); and
   a second polarizer (206) disposed between the second quarter-wave plate and the (n+1)th lens.

9. The wearable electronic device of claim 8, wherein the second polarizing plate further comprises at least one of an air layer, an adhesive layer, another polarizing layer, or a dummy layer disposed between the second polarizer and the second quarter-wave plate.

10. The wearable electronic device of any one of claims 8 and 9, wherein a polarization axis of light linearly polarized by the second polarizer and a fast axis of the second quarter-wave plate form an angle of 45 degrees, so that the second polarization plate is configured to convert the linearly polarized light into circularly polarized light.

11. The wearable electronic device of any one of claims 1 to 10, wherein the first polarizing plate comprises a first polarizer, and the second polarizing plate comprises a second polarizer, and
wherein a polarization axis of the first polarizer and a polarization axis of the second polarizer form 90 degrees.

12. The wearable electronic device of any one of claims 1 to 11, wherein the first polarizing plate comprises a first quarter-wave plate, and the second polarizing plate comprises a second quarter-wave plate, and
wherein a fast axis of the first quarter-wave plate and a fast axis of the second quarter-wave plate form 90 degrees.

13. The wearable electronic device of any one of claims 1 to 12, wherein the lens assembly satisfies the following Conditional Expression 1:

$$[\text{Conditional Expression 1}]$$
$$1.0 \leq \text{TTL/DSP} \leq 1.8$$

where "TTL" is a distance from an eye side surface of the lens farthest from the display to the display, and "DSP" is a diagonal length of the display.

14. The wearable electronic device of any one of claims 1 to 13, wherein the lens assembly satisfies the following Conditional Expression 2 regarding an Abbe number Pvd of the nth lens and an Abbe number Nvd of the (n+1)th lens,

$$[\text{Conditional Expression 2}]$$
$$0.1 \leq \text{Nvd/Pvd} \leq 0.5.$$

15. The wearable electronic device of any one of claims 1 to 14, wherein the lens assembly satisfies the following Conditional Expression 3 regarding an overall effective focal length efl and, an absolute value Nefl of an effective focal length of the (n+1)<sup>th</sup> lens,

[Conditional Expression 3]

$0.1 \leq efl/Nefl \leq 0.8.$

FIG. 1

EP 4 692 897 A1

FIG. 2

FIG. 3

FIG. 4

300

201 202 203 204 205 206 D

E

F1

L1 L2 L3 L4

LA

F2

# FIG. 5

FIG. 6

FIG. 7

FIG. 8

FIG. 9

## INTERNATIONAL SEARCH REPORT

| International application No. |
|---|
| **PCT/KR2024/006386** |

### A. CLASSIFICATION OF SUBJECT MATTER

**G02B 27/01**(2006.01)i; **G02B 13/00**(2006.01)i; **G02B 9/34**(2006.01)i; **G02B 27/09**(2006.01)i; **G02B 27/10**(2006.01)i; **G02B 5/30**(2006.01)i; **G06F 1/16**(2006.01)i

According to International Patent Classification (IPC) or to both national classification and IPC

### B. FIELDS SEARCHED

Minimum documentation searched (classification system followed by classification symbols)

G02B 27/01(2006.01); G02B 13/00(2006.01); G02B 13/18(2006.01); G02B 17/00(2006.01); G02B 27/00(2006.01); G02B 27/28(2006.01); G02B 27/48(2006.01); G02B 3/00(2006.01); G02B 5/20(2006.01); H04N 9/31(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 어셈블리(lens assembly), 편광 플레이트(polarizing plate), 디스플레이 (display), 빔 스플리터(beam splitter), 굴절력(refractive power)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0107408 A (SAMSUNG ELECTRONICS CO., LTD. et al.) 01 September 2021 (2021-09-01)<br>See paragraphs [0034], [0040]-[0041], [0060]-[0062] and [0102]; and figure 5. | 1-3 |
| Y | KR 10-2022-0123256 A (META PLATFORMS TECHNOLOGIES, LLC) 06 September 2022 (2022-09-06)<br>See claim 9; and figure 4a. | 1-3 |
| Y | JP 2012-027420 A (KONICA MINOLTA OPTO INC.) 09 February 2012 (2012-02-09)<br>See paragraphs [0042]-[0043] and [0056]; and figure 1. | 2-3 |
| A | KR 10-2023-0021283 A (SAMSUNG ELECTRONICS CO., LTD.) 14 February 2023 (2023-02-14)<br>See paragraph [0005]. | 1-3 |
| A | US 2020-0033622 A1 (CORETRONIC CORPORATION) 30 January 2020 (2020-01-30)<br>See figures 1A-1C. | 1-3 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 August 2024** | **22 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/006386** |

| **Box No. II** **Observations where certain claims were found unsearchable (Continuation of item 2 of first sheet)** |
| --- |

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **5, 7, 9**
   because they relate to parts of the international application that do not comply with the prescribed requirements to such an extent that no meaningful international search can be carried out, specifically:

   Claims 5, 7 and 9 refer to claims violating the manner of referring to multiple dependent claims (PCT Rule 6.4(a)), and thus are unclear.

3. ☑ Claims Nos.: **4, 6, 8, 10-15**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

| International application No. |
| --- |
| **PCT/KR2024/006386** |

| Patent document cited in search report | | | Publication date (day/month/year) | Patent family member(s) | | | Publication date (day/month/year) |
| --- | --- | --- | --- | --- | --- | --- | --- |
| KR | 10-2021-0107408 | A | 01 September 2021 | US | 11714283 | B2 | 01 August 2023 |
| | | | | US | 2021-0263318 | A1 | 26 August 2021 |
| KR | 10-2022-0123256 | A | 06 September 2022 | CN | 115066639 | A | 16 September 2022 |
| | | | | EP | 4094103 | A1 | 30 November 2022 |
| | | | | JP | 2023-510478 | A | 14 March 2023 |
| | | | | US | 11360308 | B2 | 14 June 2022 |
| | | | | US | 11422373 | B2 | 23 August 2022 |
| | | | | US | 2021-0223548 | A1 | 22 July 2021 |
| | | | | US | 2021-0223549 | A1 | 22 July 2021 |
| | | | | US | 2023-098118 | A1 | 30 March 2023 |
| | | | | WO | 2021-150510 | A1 | 29 July 2021 |
| JP | 2012-027420 | A | 09 February 2012 | None | | | |
| KR | 10-2023-0021283 | A | 14 February 2023 | US | 2023-0051248 | A1 | 16 February 2023 |
| | | | | WO | 2023-013846 | A1 | 09 February 2023 |
| US | 2020-0033622 | A1 | 30 January 2020 | CN | 110764348 | A | 07 February 2020 |
| | | | | EP | 3599489 | A1 | 29 January 2020 |
| | | | | JP | 2020-016877 | A | 30 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 800025 A